# EUROPÄISCHE PATENTSCHRIFT

(11) **EP 0 450 340 B1**
(45) Veröffentlichungstag und Bekanntmachung des Hinweises auf die Patenterteilung: **30.08.1995**
(21) Anmeldenummer: 91103549.1
(22) Anmeldetag: 08.03.1991
(51) Int. Cl.: G01F 17/00

(54) **Verfahren und Vorrichtung zur Bestimmung des Volumens eines Hohlraumes**
Cavity volume measuring device and method
Procédé et dispositif pour déterminer le volume d'un corps creux

(30) Priorität: 15.03.1990 DE 4008288
(43) Veröffentlichungstag der Anmeldung: 09.10.1991
(73) Patentinhaber: Steinhauer, Waltraud, D-58553 Halver (DE)
(72) Erfinder: Steinhauer, Waltraud, D-58553 Halver (DE)
(74) Vertreter: Missling, Arne, Dipl.-Ing.

(56) Entgegenhaltungen:
- DE-A- 2 210 226
- DE-A- 3 315 238
- FR-A- 2 524 140
- GB-A- 2 082 778

## Beschreibung

Die Erfindung bezieht sich auf ein Verfahren und eine Vorrichtung zur Bestimmung des Volumens eines Hohlraumes.

Bei Spannbeton-Bauwerken tritt häufig im Bereich der Spannglieder das Problem auf, daß diese nach ihrer Montage und nach der Vorspannung mit einer Füllmasse vergossen werden müssen, um eine innige Verbindung zwischen dem Spannglied und dem Betonbauwerk sicherzustellen. Diese innige Verbindung soll insbesondere eine Korrosion des Spanngliedes verhindern. Weiterhin ist es in bestimmten Anwendungsfällen erforderlich, daß das Spannglied kraftübertragend mit dem restlichen Betonwerkstoff verbunden ist. In all diesen Fällen ist es nach der Herstellung des Spannbeton-Bauwerkes erforderlich, den Nachweis zu erbringen, daß die ursprünglich bestehenden Hohlräume zwischen den Spanngliedern und dem Betonwerkstoff vollständig ausgefüllt wurden. Nur in diesem Falle kann das Spannglied im Rahmen der statischen Anforderungen an das Bauwerk berücksichtigt werden, anderenfalls ist das Spannglied aus den statischen Berechnungen zu eliminieren, um eine Überlastung des Bauwerkes zu verhindern.

Bei der Herstellung eines Bauwerkes ist es vielfach aus herstellungstechnischen oder geometrischen Gründen nicht möglich, die das Spannglied umgebenden Hohlräume sofort zu befüllen. Vielmehr müssen diese nachträglich angebohrt und aufgefüllt werden. Dabei ergibt sich das Problem, daß eine vollständige Füllung der Hohlräume nicht mit üblichen Mitteln der Materialprüfung festgestellt werden kann. Es ist deshalb erforderlich, das Volumen des zu befüllenden Hohlraumes exakt zu bestimmen, um bei der nachfolgenden Einpressung der Füllmasse eine Aussage darüber erlangen zu können, ob eine entsprechende Volumenmenge der Füllmasse eingebracht wurde.

Aus dem Stand der Technik sind Verfahren bekannt, beispielsweise aus der DE-PS 22 10 226, bei welchen an den Hohlraum ein Unterdruck angelegt wird. Das grundsätzliche Problem bei derartigen Verfahren besteht darin, daß der zu befüllende Hohlraum üblicherweise mit Leckstellen in Verbindung steht, beispielsweise Rissen, Poren o.ä., durch welche einerseits beim Füllen die Füllmasse austreten kann und durch welche andererseits bei der Bestimmung des Volumens des Hohlraumes Ungenauigkeiten eintreten können. Zusätzlich zu dieser Schwierigkeit bietet das Unterdruck-Verfahren die Gefahr, daß Änderungen des Außendruckes sowie Änderungen der Temperatur der Gase und/oder der Teile des Bauwerkes den Meßvorgang verfälschen.

Aus der FR-A-2 524 140 ist weiter ein Verfahren bekannt, bei dem der Hohlraum mit Gas auf einen vorgegebenen Überdruck gefüllt wird und anschließend der Hohlraum bis zum Erreichen des Atmosphärendrucks entleert wird, wobei gleichzeitig das Volumen des ausströmenden Gases bestimmt wird. Falls der Hohlraum dicht ist, läßt sich daraus unmittelbar das Volumen des Hohlraums bestimmen. Falls eine Leckage vorliegt, werden gemäß dieser Schrift zusätzlich die beiden Zeiten gemessen, die jeweils nötig sind, um den Hohlraum über die Leckage alleine bzw. über Leckage samt Volumenzähler vom vorgegebenen Überdruck auf Atmosphärenddruck zu entspannen. Aus den beiden Zeiten und dem gemessenen Volumen wird das Volumen des Hohlraums bestimmt.

Der Erfindung liegt die Aufgabe zugrunde, ein Verfahren und eine Vorrichtung zu schaffen, welche bei einfachem Aufbau und einfacher, betriebssicherer Anwendbarkeit eine zuverlässige Messung des Volumens eines Hohlraumes unter Minimierung der Meßfehler gestatten.

Erfindungsgemäß wird die Aufgabe gelöst durch ein Verfahren gemäß Anspruch 1.

Das erfindungsgemäße Verfahren zeichnet sich durch eine Reihe erheblicher Vorteile aus. Da erfindungsgemäß in dem Hohlraum ein bestimmter, vorgegebener Überdruck erzeugt wird, ist das Verfahren von Änderungen der Umgebungstemperatur sowie von Änderungen des Außendruckes unabhängig, da verfahrensgemäß lediglich die Aufbringung eines entsprechenden Überdruckes erforderlich ist. Ein weiterer, wesentlicher Vorteil gegenüber den bekannten Unterdruckverfahren besteht darin, daß die Aufbringung eines Überdruckes wesentlich schneller erfolgen kann. Zusätzlich besteht die Möglichkeit, den vorgegebenen Überdruck beliebig zu wählen, so daß, verglichen mit dem Umgebungsdruck, eine erhebliche Druckdifferenz erzeugt werden kann, welche die Betriebssicherheit des Verfahrens erheblich steigert, während bei den bekannten Unterdruckverfahren lediglich die Druckdifferenz zwischen dem Umgebungs-Luftdruck und einem theoretisch nicht zu erreichenden Vakuum zur Verfügung stand.

Weiterhin ist es erfindungsgemäß besonders einfach möglich, einen entsprechenden Leckagestrom festzustellen, da lediglich die Luftmenge während der Messung nachgeführt werden muß, welche durch Lecks, wie etwa Risse o.ä. entweicht. Dies kann in einfachster Weise durch ein Regelventil erfolgen. Somit läßt sich innerhalb kürzester Zeit ein stabiler Überdruck in dem Hohlraum verwirklichen, welcher die Voraussetzung für die nachfolgende Entleerung und Bestimmung des Hohlraumvolumens ist.

In einer besonders günstigen Ausgestaltung des erfindungsgemäßen Verfahrens ist vorgesehen, daß die Zuführung der der Leckage gleichen Gasmenge während der Entleerung des Hohlraumes bei einem Druckwert beendet wird, welcher höher ist, als der vorgegebene Enddruck. Auf diese Weise wird berücksichtigt, daß die Entleerung und Ausströmung des in dem Hohlraum befindlichen Gasvolumens nicht linear erfolgt. Verfälschungen der Messung werden somit ausgeschlossen, da die Zuführung der entsprechenden Leckagemenge bei einem Druckwert unterbrochen wird, bei welchem die durch die Lecks ausströmende Gasströmung einen nicht mehr relevanten Wert erreicht hat.

In der praktischen Anwendung kann es natürlich auch vorkommen, daß ein Hohlraum keinerlei Lecks aufweist, so daß der anfänglich in dem Hohlraum eingestellte Überdruck auf einem stabilen Wert aufrecht erhalten bleibt. Um auch in diesen Fällen eine zuverlässige Messung zu gewährleisten, erweist es sich als günstig, wenn ein Leck dadurch simuliert wird, daß aus dem System eine geringe Gasmenge abgelassen wird, so daß durch die Zuführleitung weiterhin eine bestimmte Gasmenge über das Regelventil zugeleitet wird. Durch diese Maßnahme wird die Aufrechterhaltung eines vorgegebenen Überdruckes in dem Hohlraum wesentlich erleichtert.

In einer besonders vorteilhaften Ausgestaltung der Erfindung ist vorgesehen, daß der Überdruck auf einen Wert von ca. 1,2 Bar eingestellt wird. Der Enddruck, bei welchem die Messung beendet ist, kann dann beispielsweise einen Überdruckwert von 0,2 Bar aufweisen. Hierbei ist es günstig, wenn die Zuführung einer der Leckage gleichen Gasmenge bei einem Überdruck von 0,7 Bar beendet wird. Da bei diesen Zahlenwerten die Druckdifferenz 1 Bar beträgt, ist der an einem Zählwerk eines Volumenmessers abzulesende Wert gleich der Summe des Volumens des Hohlraumes sowie der Apparatur. Da das apparatetechnische Volumen, welches die Schläuche, Ventile u-ä. umfaßt, bekannt ist, kann das Volumen des Hohlraumes auf einfachste Weise bestimmt werden.

Bezüglich der Vorrichtung wird die Aufgabe erfindungsgemäß gelöst gemäß Anspruch 7. Mit Hilfe des ersten und des zweiten Absperrventiles ist es somit möglich, die gesamte Anlage zur Umgebung hin dicht zu verschließen bzw. sowohl die Ablaßleitung als auch die Anschlußleitung jeweils separat zu schließen. Das Regelventil dient dazu, in exakter Weise den durch Leckagen entweichenden Gasstrom zuzuführen, so daß ein stabiler Überdruckwert aufrechterhalten werden kann.

Um in der bereits beschriebenen Weise auch bei einem vollständig dichten Hohlraum eine bestimmte Gasmenge abführen zu können, ist zwischen dem Abzweigelement und dem zweiten Absperrventil in der Ablaßleitung ein mit der Umgebung verbundenes Auslaßventil angebracht. Die bei einem dichten Hohlraum durch dieses Ablaßventil auszuleitende Gasmenge dient dazu, das Regelventil (Motorventil) in einem teilweise geöffneten Zustand zu halten, um auf diese Weise den vorgegebenen Überdruck besonders präzise einstellen zu können.

In einer besonders günstigen Ausgestaltung der Erfindung ist vorgesehen, daß die gesamte Vorrichtung elektronisch gesteuert arbeitet. Zu diesem Zwecke ist zumindest das erste und das zweite Absperrventil und das Regelventil jeweils mit einer Steuereinrichtung betriebsverbunden. Diese kann weiterhin mit entsprechenden Druckwertaufnehmern und/oder der Durchfluß-Meßeinrichtung verbunden sein.

Im folgenden wird die Erfindung anhand eines Ausführungsbeispiels in Verbindung mit der Zeichnung beschrieben. Dabei zeigt.

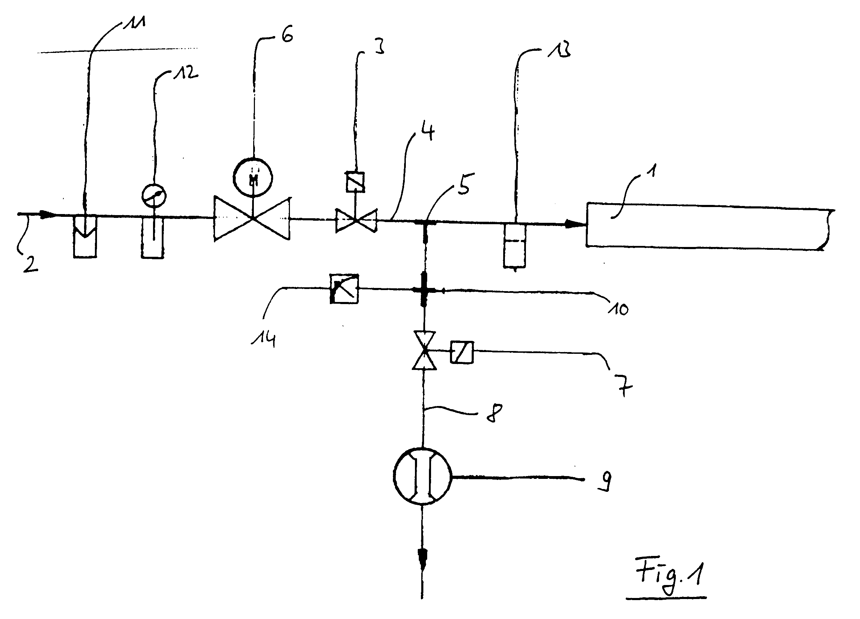

- Fig. 1: eine schematische Darstellung der erfindungsgemäßen Vorrichtung.

Eine Druckluftquelle 2 ist über eine Anschlußleitung 4 mit einem Hohlraum 1 verbunden. Die Anschlußleitung 4 umfaßt einen Wasserabscheider 11 sowie einen Druckminderer 12. Nachfolgend ist in der Anschlußleitung 4 ein Regelventil 6 angeordnet, welches in Form eines Motorventiles ausgebildet sein kann. Stromab des Regelventiles 6 ist ein erstes Absperrventil 3 vorgesehen, mit Hilfe dessen die Anschlußleitung 4 absperrbar ist.

Stromab des ersten Absperrventiles 3 ist in der Anschlußleitung 4 ein Abzweigelement 5 (T-Stück) eingebaut. Zwischen dem Hohlraum 1 und dem Abzweigelement 5 ist weiterhin ein Filter 13 vorgesehen.

Der freie Schenkel des Abzweigelementes 5 ist mit einer Ablaßleitung 8 verbunden, welche über ein zweites Absperrventil 7 verschließbar ist. Zwischen dem Absperrventil 7 und dem Abzweigelement 5 ist ein Auslaßventil 10 zwischengeschaltet, welches mit einem Drucktransmitter 14 betriebsverbunden ist. Durch das Auslaßventil 10 kann eine vorgegebene Luftmenge in die Umgebung abgeführt werden.

Stromab des zweiten Absperrventiles 7 weist die Ablaßleitung 8 eine Durchfluß-Meßeinrichtung 9 auf, welche in Form eines Volumenmessers ausgebildet ist.

Im folgenden wird die Betriebsweise der erfindungsgemäßen Vorrichtung beschrieben:

Der Hohlraum 1 wird nach Öffnung des ersten Absperrventiles 3 und nach Schließen des zweiten Absperrventiles 7 sowie des Auslaßventiles 10 mit Druckluft auf einen vorgegebenen Überdruck gefüllt, beispielsweise auf einen Druck von 1,2 Bar. Der Vordruck wird durch den Druckminderer 12 konstant gehalten und zwar durch den Druckminderer vor dem Regelventil. Mit Hilfe des Drucktransmitters 14 wird dieser Überdruck überwacht, wobei die Ausgangssignale des Drucktransmitters 14 an eine nicht dargestellte Steuereinrichtung übertragen werden, welche wiederum das Regelventil (Motorventil) 6 so steuert, daß bei unterschiedlicher Leckage des Hohlraumes 1 in diesem der gewünschte Überdruck von beispielsweise 1,2 Bar aufrecht erhalten wird.

Falls die Leckage des Hohlraumes 1 nicht ausreichend groß ist, um eine konstante Luftzuführung durch das Regelventil 6 sicherzustellen, wird eine geringe Luftmenge durch das Auslaßventil 10 in die Umgebung abgelassen.

Die nachfolgende Bestimmung des Volumens des Hohlraumes 1 beginnt mit der Öffnung des zweiten Absperrventiles 7, wobei das Regelventil 6 in seiner jeweiligen, vorher eingestellten Stellung blockiert wird. Die in dem Hohlraum 1 befindliche Gasmenge strömt somit durch die Durchfluß-Meßeinrichtung 9 in die Umgebung. Gleichzeitig strömt durch das Regelventil 6 eine der Leckage entsprechende Luftmenge in das System ein, welche über die Durchfluß-Meßeinrichtung 9 ebenfalls in die Umgebung abgeführt wird. Während dieser Messung fällt der Druck in dem Gesamtsystem ab, da die maximale Durchflußmenge durch die Durchfluß-Meßeinrichtung 9 größer ist, als die durch das Regelventil 6 zugeführte Luftmenge. Bei Erreichen eines vorgegebenen Druckes, beispielsweise 0,7 Bar, wird das erste Absperrventil 3 geschlossen, so daß nunmehr durch die Durchfluß-Meßeinrichtung 9 lediglich die in dem Hohlraum 1 bzw. dem Leitungssystem der Vorrichtung befindliche Luftmenge strömt. Durch das Schließen des ersten Absperrventiles 3 erfolgt dabei eine Beendigung des Ausgleichs durch Leckagen des Hohlraumes 1 abströmenden Luftmenge.

Sobald der vorgegebene Enddruck von beispielsweise 0,2 Bar erreicht ist, wird auch das zweite Absperrventil 7 geschlossen. Die Messung ist damit beendet. Da bei dem Beispiel die Druckdifferenz von 1,2 zu 0,2 Bar 1 Bar beträgt, ist der am Zählwerk der Durchfluß-Meßeinrichtung abzulesende Wert gleich der Summe des Volumens des Hohlraumes und der entsprechenden Leitungen. Da das Volumen der Leitungen bekannt ist, kann somit das Hohlraumvolumen auf besonders einfache Weise bestimmt werden.

Das erfindungsgemäße Verfahren ist vom Außendruck sowie weitgehend von der jeweiligen Temperatur unabhängig und kann besonders schnell durchgeführt werden.

Die Erfindung ist nicht auf das gezeigte Ausführungsbeispiel beschränkt, vielmehr ergeben sich für den Fachmann im Rahmen der in den Ansprüchen definierten Erfindung vielfältige Abwandlungs- und Modifikationsmöglichkeiten.

## Patentansprüche

1. Verfahren zur Bestimmung des Volumens eines Hohlraumes (1), bei dem der Hohlraum (1) mit Gas auf einen vorgegebenen Überdruck gefüllt wird, daß der Überdruck zum Ausgleich von Leckagen des Hohlraumes (1) über einen vorgegebenen Zeitraum dadurch aufrecht erhalten wird, daß dem Hohlraum (1) ständig Gas in der Menge der Leckage zugeführt wird, und anschließend der Hohlraum (1) bei zumindest anfänglich weiterer Zuführung der zuvor ermittelten, die Leckage ausgleichenden Gasmenge bis zum Erreichen eines vorgegebenen Enddruckes entleert wird, wobei gleichzeitig das Volumen des ausströmenden Gases bestimmt wird.

2. Verfahren nach Anspruch 1, dadurch gekennzeichnet, daß die Zuführung der der Leckage gleichen Gasmenge während der Entleerung des Hohlraumes (1) bei einem Druckwert beendet wird, welcher höher ist, als der vorgegebene Enddruck.

3. Verfahren nach Anspruch 1 oder 2, dadurch gekennzeichnet, daß während der Aufrechterhaltung des Überdruckes aus dem System eine geringe Gasmenge abgelassen wird.

4. Verfahren nach einem der Ansprüche 1 bis 3, dadurch gekennzeichnet, daS der Überdruck auf einen Wert von 1,2 Bar eingestellt wird.

5. Verfahren nach einem der Ansprüche 1 bis 4, dadurch gekennzeichnet, daß der Enddruck auf einen Überdruckwert von 0,2 Bar eingestellt wird.

6. Verfahren nach einem der Ansprüche 2 bis 5, dadurch gekennzeichnet, daß die Zuführung der der Leckage gleichen Gasmenge bei einem Überdruck von 0,7 Bar beendet wird.

7. Vorrichtung zur Durchführung des Verfahrens nach einem der Ansprüche 1 bis 6, enthaltend eine Druckluftquelle (2), welche über eine mit einem ersten Absperrventil (3) versehene Anschlußleitung (4) und ein in diese eingeschaltetes Abzweigelement (5) mit dem Hohlraum (1) verbunden ist, ein Regelventil (6) in der Anschlußleitung (4), eine mit dem Abzweigelement (5) verbundene, mit eine Steuereinrichtung, die bei der Ermittlung der Leckage das Regelventil so steuert, daß der vorgegebene Überdruck aufrecht erhalten wird, einem zweiten Absperrventil (7) versehene Ablaßleitung (8) und eine Durchfluß-Meßeinrichtung (9) in der Ablaßleitung (8).

8. Vorrichtung nach Anspruch 7, dadurch gekennzeichnet, daß zwischen dem zweiten Absperrventil (7) und dem Abzweigelement (5) in der Ablaßleitung (8) ein mit der Umgebung verbundenes Auslaßventil (10) angebracht ist.

9. Vorrichtung nach Anspruch 7 oder 8, dadurch gekennzeichnet, daS das erste (3) und das zweite (7) Absperrventil mit der Steuereinrichtung betriebsverbunden sind.

## Claims

1. A method of determining the volume of a cavity (1), in which the cavity (1) is filled with gas to a pre-determined overpressure, in order to compensate leakages from the cavity (1) the overpressure is maintained over a pre-determined period by the constant supplying of gas in the quantity of the leakage to the said cavity (1), and then, while the previously determined quantity of gas which compensates the leakage is further supplied, at least at first, the cavity (1) is evacuated until a pre-determined final pressure is achieved, wherein the volume of the gas flowing out is determined at the same time.

2. A method according to Claim 1, **characterized in that** during the evacuation of the cavity (1) the supply of the quantity of gas equal to the leakage is terminated at a pressure which is higher than the predetermined final pressure.

3. A method according to Claim 1 or 2, **characterized in that** a small quantity of gas is discharged from the system while the overpressure is maintained.

4. A method according to one of Claims 1 to 3, **characterized in that** the overpressure is set to a value of 1·2 bar.

5. A method according to one of Claims 1 to 4, **characterized in that** the final pressure is set to an overpressure value of 0·2 bar.

6. A method according to one of Claims 2 to 5, **characterized in that** the supply of the quantity of gas equal to the leakage is terminated at an overpressure of 0·7 bar.

7. A device for performing the method according to one of Claims 1 to 6, comprising a compressed-air source (2) connected to the cavity (1) by way of a connecting line (4) provided with a first shut-off valve (3) and a branch member (5) connected into the said shut-off valve (3); a regulating valve (6) in the connecting line (4); a control device controlling the regulating valve in such a way while the leakage is determined that the pre-determined overpressure is maintained; a discharge line (8) connected to the branch member (5) and provided with a second shut-off valve (7); and a throughflow measurement device (9) in the discharge line (8).

8. A device according to Claim 7, **characterized in that** an outlet valve (10) connected to the atmosphere is arranged in the discharge line (8) between the second shut-off valve (7) and the branch member (5).

9. A device according to Claim 7 or 8, **characterized in that** the first shut-off valve (3) and the second shut-off valve (7) are operatively connected to the control device.

## Revendications

1. Procédé et dispositif pour déterminer le volume d'un corps creux (1), selon lequel on remplit le corps creux de gaz pour obtenir une surpression donnée, on maintient constante ladite surpression, destinée à compenser les fuites se produisant dans le corps creux (1), pendant une période donnée, du gaz en quantité égale aux fuites étant acheminé en permanence dans le corps creux (1), et on vidange ensuite le corps creux (1), tout en continuant d'y introduire, au moins au début, la quantité de gaz destinée à compenser la fuite et déterminée préalablement, jusqu'à l'obtention d'une pression finale donnée, et on détermine simultanément le volume du gaz sortant.

2. Procédé selon la revendication 1, caractérisé en ce que pendant la vidange du corps creux (1), l'alimentation en gaz en quantité égale à la fuite, s'achève à une valeur de pression qui est supérieure à celle de la pression finale donnée.

3. Procédé selon la revendication 1 ou 2, caractérisé en ce qu'on laisse s'échapper une faible quantité de gaz hors du système pendant le maintien de la surpression.

4. Procédé selon l'une quelconque des revendications 1 à 3, caractérisé en ce que la surpression est réglée sur une valeur de 1,2 bars.

5. Procédé selon l'une quelconque des revendications 1 à 4, caractérisé en ce que la pression finale est réglée sur une valeur de surpression de 0,2 bar.

6. Procédé selon l'une quelconque des revendications 1 à 5, caractérisé en ce que l'alimentation en gaz en quantité égale à celle de la fuite s'achève à une surpression de 0,7 bar.

7. Dispositif de mise en oeuvre du procédé selon l'une quelconque des revendications 1 à 6, comprenant une source d'air comprimé (2) qui est reliée au corps creux (1) par l'intermédiaire d'une conduite de raccord (4) pourvue d'une première vanne d'arrêt (3) ainsi que d'un élément de dérivation (5) monté sur ladite conduite, une vanne de régulation (6) montée sur la conduite de raccord (4), un dispositif de commande qui, lors de la détermination de la fuite, commande la vanne de régulation d'une manière telle que la surpression donnée est maintenue, une ligne d'évacuation (8) raccordée à l'élément de dérivation (5) et pourvue d'une seconde vanne d'arrêt (7), ainsi qu'un dispositif (9) de mesure du débit monté sur la ligne d'évacuation (8).

8. Dispositif selon la revendication 7, caractérisé en ce qu'une vanne d'évacuation (10) reliée avec l'extérieur est montée entre la seconde vanne d'arrêt (7) et l'élément de dérivation (5), sur la ligne d'évacuation (8).

9. Dispositif selon la revendication 7 ou 8, caractérisé en ce que les première et seconde vannes d'arrêt (3) et (7) sont reliées opérationnellement avec le dispositif de commande.
